(19) Europäisches Patentamt
European Patent Office
Office européen des brevets

(11) Veröffentlichungsnummer : **0 068 244**
**B1**

(12) # EUROPÄISCHE PATENTSCHRIFT

(45) Veröffentlichungstag der Patentschrift : **11.12.85**

(51) Int. Cl.⁴ : **C 25 D 13/06**, C 09 D 5/44

(21) Anmeldenummer : **82105143.0**

(22) Anmeldetag : **12.06.82**

(54) **Badzusammensetzung für die kataphoretische Elektrotauchlackierung.**

(30) Priorität : **19.06.81 DE 3124088**

(43) Veröffentlichungstag der Anmeldung : **05.01.83 Patentblatt 83/01**

(45) Bekanntmachung des Hinweises auf die Patenterteilung : **11.12.85 Patentblatt 85/50**

(84) Benannte Vertragsstaaten : **AT BE DE FR GB IT NL SE**

(56) Entgegenhaltungen :
**EP-A- 0 027 641**
**FR-A- 2 226 445**
**FR-A- 2 293 501**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Kempter, Fritz Erdmann, Dr.**
**L 2,14**
**D-6800 Mannheim (DE)**
Erfinder : **Schupp, Eberhard, Dr.**
**Tilsiter Weg 4**
**D-6830 Schwetzingen (DE)**
Erfinder : **Sabelus, Guenther, Dr.**
**Neustadter Strasse 25**
**D-6715 Lambsheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 068 244 B1

**Beschreibung**

Die Erfindung betrifft eine Badzusammensetzung für die kataphoretische Elektrotauchlackierung, enthaltend neben Wasser und üblichen Hilfs- und Zusatzstoffen ein oder mehrere mit Säure löslich oder dispergierbar gemachte, stickstoffbasische Gruppen enthaltende Beschichtungsmittel.

Das Verfahren der kataphoretischen Elektrotauchlackierung, bei der filmbildende Materialien unter dem Einfluß eines angelegten elektrischen Potentials auf einem Substrat abgelagert werden, hat in den letzten Jahren große wirtschaftliche Bedeutung erlangt. Dabei werden vorwiegend geblockte Isocyanatgruppen enthaltende modifizierte Epoxidharze, z. B. nach DE-A-22 52 536, DE-A-20 57 799, DE-A-23 63 074 sowie Doppelbindungen enthaltende modifizierte Urethan-Epoxidharze, z. B. nach DE-A-27 59 776, 27 32 955, 27 55 538, oder 27 53 861 angewandt. Schließlich werden Bindemittel eingesetzt, die zur Klasse der Epoxidharz-modifizierten Mannichbasen gehören und z. B. nach den DE-A-23 30 301, 23 57 075 und 24 19 179 hergestellt werden können.

Elektrotauchlackbäder der ersten beiden obengenannten Bindemittelklassen weisen den Nachteil der Anwesenheit von löslichen Bleisalzen, mit der damit verbundenen Entsorgungspflicht auf.

Elektrotauchlackbäder auf Basis von Mannichbasen, deren Vernetzungsreaktion praktisch ausschließlich über Gruppen der allgemeinen Formel I,

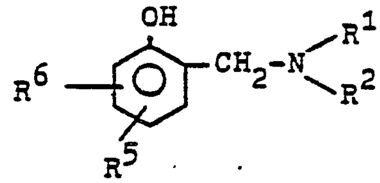

(I)

insbesondere aber über Diethanolaminomethyl-Gruppen ablaufen, wie sie beispielsweise in der FR-A-22 26 445 bzw. DE-A-23 20 301 beschrieben sind, sollten in ihren Badalterungseigenschaften weiter verbessert werden.

Außerdem sollte nach Möglichkeit die zur Erzielung eines hohen Korrosionsschutzniveaus auf mit Metallphosphaten behandelten Stahlblechen übliche Vorbehandlung mit Chromsäure-haltigen Spülmitteln wegen der damit verbundenen Umweltbelastung vermieden werden.

Aufgabe der vorliegenden Erfindung ist es, wäßrige Badzusammensetzungen für die kataphoretische Elektrotauchlakkierung aufzuzeigen, die die obengenannten Nachteile nicht aufweisen oder diesbezüglich zumindest wesentlich verbessert sind.

Dieses Ziel läßt sich dadurch erreichen, daß zur kataphoretischen Elektrotauchlackierung wäßrige Badzusammensetzungen herangezogen werden, die mindestens ein mit einer Säure löslich und/oder dispergierbar gemachtes Beschichtungsmittel enthalten, welches bestimmte Gruppierungen enthält.

Gegenstand der vorliegenden Erfindung ist eine Badzusammensetzung für die kataphoretische Elektrotauchlackierung, enthaltend neben Wasser und üblichen Hilfs- und Zusatzstoffen ein oder mehrere mit Säure löslich oder dispergierbar gemachte, stickstoffbasische Gruppen enthaltende Beschichtungsmittel, die dadurch gekennzeichnet ist, daß das oder die Beschichtungsmittel Gruppen der allgemeinen Formeln (I) und (II)

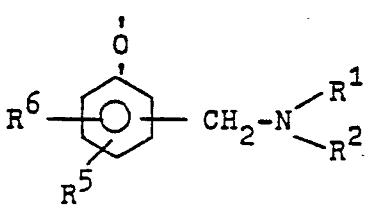

(I)

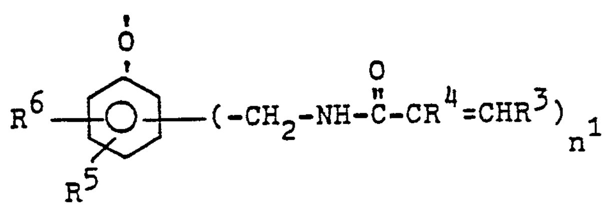

(II)

sowie gegebenenfalls zusätzlich Gruppen der allgemeinen Formeln (III) und/oder (IV)

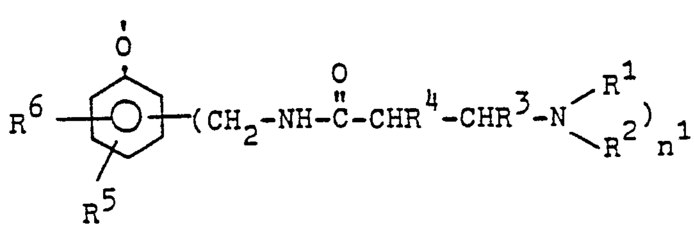

(III)

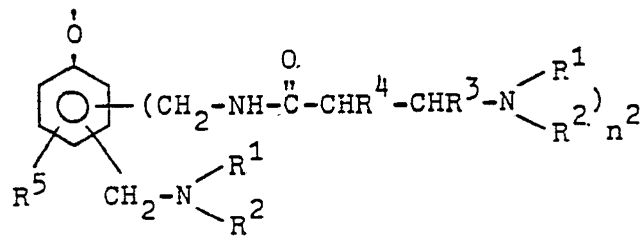

(IV)

tragen, worin $R^1$ und $R^2$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6-gliedrigen Ring verknüpft sind, $R^3$ und $R^4$ untereinander gleich oder verschieden sind und für Wasserstoff oder eine Methylgruppe stehen, $R^5$ und $R^6$ untereinander gleich oder verschieden sind und für Wasserstoff, einen Alkylrest mit 1 bis 13 Kohlenstoffatomen, einen Alkenylrest mit 10 bis 18 Kohlenstoffatomen oder für einen an ein Phenol oder einen Phenoläther gebundenen Methylen-, Äthylen-, Isopropyliden,

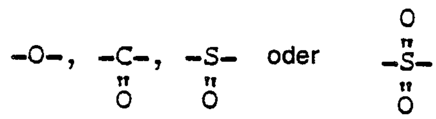

oder

Rest oder für den Rest eines Polymermoleküls stehen und $n^1 = 1$, 2 oder 3, $n^2 = 1$ oder 2 sein kann, wobei der am Phenylrest der Formeln (I) bis (IV) gebundene Sauerstoff entweder als Bestandteil einer Hydroxylgruppe oder einer Äthergruppe vorliegen kann.

Bevorzugt sind insbesondere solche Badzusammensetzungen, die Kupfer und/oder Kobalt komplex gebunden, in Mengen von 1 bis 1 000 ppm enthalten.

Gegenstand der vorliegenden Erfindung sind auch derartige Badzusammensetzungen, die zusätzlich Pigmente und/oder Füllstoffe und/oder organische Lösungsmittel bzw. außerdem nicht wasserlösliche oder wasserdispergierbare Bindemittel enthalten.

Zu den Aufbaukomponenten der Beschichtungsmittel sowie der erfindungsgemäßen Badzusammensetzung ist im einzelnen folgendes auszuführen.

Bei den Beschichtungsmitteln, die in den erfindungsgemäßen Badmaterialien gelöst und/oder dispergiert vorliegen können und die Gruppen der allgemeinen Formeln (I) und (II) sowie gegebenenfalls zusätzlich Gruppen der allgemeinen Formeln (III) und/oder (IV) aufweisen, handelt es sich um selbst- und/oder fremdvernetzende Materialien, d. h. Amino-methyl-phenol-Reste können mit Amido-methyl-phenol-Resten zusammen in einem Harzmolekül eingebaut sein oder jeweils in verschiedenen Molekülen vorkommen.

Eine einfache Methode Badmaterialien der erfindungsgemäßen Zusammensetzung zu erhalten, besteht in der Kombination von Mannichbasen-Epoxidharz-Reaktionsprodukten, wie sie z. B. in den schon genannten DE-PS 23 20 301, 23 57 075 und 24 19 179 beschrieben sind, mit Amido-methyl-phenol-Epoxidharz-Reaktionsprodukten, wie sie z. B. EP-A-27 641, EP-A-41 619, EP-A-43 935, EP-A-68 243 und EP-A-68 241 zu entnehmen sind.

Im allgemeinen üben die genannten Epoxidharz-modifizierten Mannichbasen eine gewisse Trägerfunktion für die Amido-methyl-phenol-Epoxidharz-Reaktionsprodukte aus. Im Extremfall kann dies soweit gehen, daß die Amido-methyl-phenol-Epoxidharz-Reaktionsprodukte keinen kationischen Charakter mehr aufweisen und praktisch völlig wasserunlöslich bzw. für sich alleine nicht dispergierbar sind.

In einem anderen möglichen Fall werden die Amido-methyl-phenol-Epoxidharz-Reaktionsprodukte als kathodisch abscheidbare Trägermaterialien mit einfach gebauten Mannichbasen, die aus z. B. Bisphenol-A und einem sekundären Dialkylamin aufgebaut sind, kombiniert.

Eine Möglichkeit zu den erwähnten selbstvernetzenden Badmaterialien zu gelangen, ist in EP-A-65 163 erwähnt, darüber hinaus lassen sich die Gruppen der Formel (II) aufweisenden Beschichtungsmittel bzw. Badmaterialien dadurch herstellen, daß Amido-methyl-phenole, vor ihrer Umsetzung mit Epoxidgruppen mit dem aus sekundärem Amin und Formaldehyd in einem getrennten Schritt erhaltenen Umsetzungsprodukt (V)

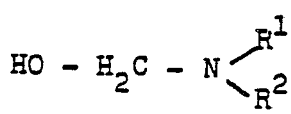

(V)

zur Reaktion gebracht werden. Diese Maßnahme läßt die ungesättigten Gruppen der allgemeinen Formel (II) weitgehend intakt.

Für die erfindungsgemäße Badzusammensetzung ist es wesentlich, daß mindestens ein Teil der Gruppen der allgemeinen Formel (I), soweit es sich um mehrwertige Phenole handelt, in Form des Phenols (Ia)

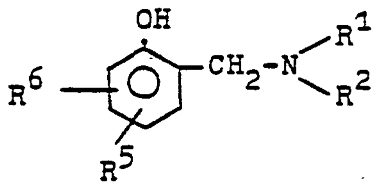

(Ia)

oder des Phenoläthers (Ib),

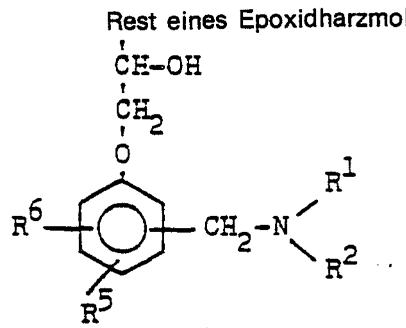

(Ib)

vorliegt, wobei die Gruppierungen gegebenenfalls mit Kupfer und/oder Kobalt-Ionen zur Komplex-Bildung befähigt sind und mit den Gruppen der allgemeinen Formel (II) und gegebenenfalls (III) und/oder (IV) nach der kataphoretischen Beschichtung eine Vernetzungsreaktion eingehen können.

Die Komponenten zum Aufbau der Bindemittel können für die Mannichbasen/Epoxidharz-Reaktionsprodukte, die Gruppierungen der allgemeinen Formel (I) tragen, den DE-PS 23 20 301, 23 57 075 und 24 19 179, für die Amidomethylphenol/Epoxidharz-Reaktionsprodukte, die Gruppierungen der allgemeinen Formeln (II) bzw. (III) tragen, den EP-A-27 641, EP-A-41 619 und EP-A-43 934 sowie für Polyadditions/Polykondensationsprodukte, die Gruppen der allgemeinen Formeln (I), (III) und (IV) tragen, den EP-A-43 935 und EP-A-68 241 sowie für Produkte, die Gruppierungen der allgemeinen Formeln (I) und (IV), wobei $R^1$ und $R^2$ der Mannichgruppierungen für Alkyl- oder Alkoxyalkylreste stehen, sowie (II) und (III) tragen, der EP-A-68 243 entnommen werden.

Produkte die die allgemeine Formel (II) aufweisen, selbst jedoch keinen bzw. praktrisch keinen Gehalt an basischen N-Atomen besitzen, werden z. B. durch Quartäronium-Gruppenkatalysierte Umsetzung von acrylamidomethylierten Phenolen mit Epoxidverbindungen erhalten und können mit z. B. Polyadditions/Polykondensationsprodukten, die Gruppen der allgemeinen Formel (I) aufweisen, kombiniert werden.

Die für die erfindungsgemäßen Badzusammensetzungen zu verwendenden Beschichtungsmittel werden, gegebenenfalls in Kombination mit anderen Bindemitteln, beispielsweise mit Polybutadienölen, (in Mengen von bis zu 25 Gew.%) mit Säuren, wie z. B. Phosphorsäure und ihren Derivaten, vorzugsweise mit wasserlöslichen Carbonsäuren, wie z. B. Essigsäure, Ameisensäure, Milchsäure, protoniert angewandt, vorzugsweise als Lackbindemittel für die kathodische Elektrotauchlackierung elektrisch leitender Flächen, z. B. von Metallteilen, Blechen usw. aus Messing, Kupfer, Aluminium, metallisierte Kunststoffe oder mit leitenden Kohlenstoff überzogene Materialien, sowie Eisen und Stahl, die gegebenenfalls chemisch vorbehandelt, z. B. phosphatiert, sind, verwendet.

Die für die erfindungsgemäßen Badzusammensetzungen zu verwendenden Beschichtungsmittel weisen die Gruppierungen der allgemeinen Formel (I) bis (IV) in einer solchen Anzahl auf, daß die Badzusammensetzungen einen genügend hohen pH-Wert aufweisen und unter den gewählten Einbrennbedingungen eine ausreichende Vernetzung stattfindet ; mindestens aber enthalten die Beschichtungsmittel jeweils eine der genannten Gruppierungen pro Molekül des Beschichtungsmittels, im allgemeinen jedoch 2 bis 4 der Gruppierungen der allgemeinen Formel (I) bis (IV). Dabei kann die Verteilung der Gruppierungen in beliebig weiten Grenzen gewählt werden.

Die wäßrigen Lösungen oder Dispersionen der zumindest teilweise als Salz vorliegenden erfindungsgemäßen Badzusammensetzungen können auch im Gemisch mit diesen durch Kataphorese elektrochemisch abscheidbare übliche Hilfs- und Zusatzstoffe enthalten, wie Pigmente, z. B. Ruß, Talkum, Titandioxid, Kaolin, basisches Bleichromat, Eisenoxidpigmente etc., lösliche Farbstoffe, Lösungsmittel, Verlaufsverbesserer, Stabilisatoren, Antischaummittel sowie andere Hilfs- und Zusatzstoffe, Härtungskatalysatoren, besonders die autoxidative Härtung beschleunigende metallhaltige Mangan- bzw. Kobaltnaphtenate oder -octoate, ausserdem Metallsalze wie sie zum bekannten Stand der Technik gehören und z. B. in der DE-OS 25 41 234 und 24 57 437 genannt sind, insbesondere aber das zur bereits erwähnten Komplexbildung mit den Gruppen der allgemeinen Formel (I) befähigte $Cu^{++}$ bzw. $Co^{++}$-Ion. Die für die erfindungsgemäße Badzusammensetzung zu verwendenden Beschichtungsmittel können gegebenenfalls einen gewissen Gehalt an quartären Ammoniumgruppen aufweisen, was zur Erhöhung des pH-Wertes der aus ihnen hergestellten Badzusammensetzungen erwünscht sein kann.

Zur kathodischen Elektrotauchlackierung wird im allgemeinen durch Verdünnen mit entionisiertem

Wasser ein Feststoffgehalt des Elektrotauchbades von 5 bis 30, vorzugsweise 10 bis 20 Gewichtsprozent eingestellt. Die Abscheidung erfolgt im allgemeinen bei Temperaturen von 15 bis 40 °C während einer Zeit von 1 bis 3 Minuten und bei pH-Bad-Werten von 5,0 bis 8,5, vorzugsweise pH 6,0 bis 7,5, bei Abscheidspannungen zwischen 50 und 500 Volt. Nach dem Abspülen des auf dem elektrisch leitenden Körper abgeschiedenen Films wird dieser bei etwa 140 °C bis 200 °C 10 bis 30 Minuten, vorzugsweise bei 150 °C bis 180 °C ca. 20 Minuten gehärtet.

Die folgenden Beispiele a)-g) bzw. A-D beschreiben die Herstellung von Vorprodukten für die erfindungsgemäßen Badzusammensetzungen, die Beispiele 1-5 betreffen erfindungsgemäße Badzusammensetzungen, ohne sie auf diese Beispiele zu beschränken. Die in den Beispielen genannten Teile und Prozente sind, soweit nicht anders angegeben, Gewichtsteile und Gewichtsprozente.

a) Herstellung eines Äthergruppen enthaltenden Polyphenols

Entsprechend Beispiel 1 der DE-PS 24 19 179 werden 420 Teile eines Triglycidyläthers aus Pentaerythrit und Epichlorhydrin mit einem Epoxidwert von 0,62 mit 73,2 Teilen Phenol bei 180 °C 30 Minuten zur Reaktion gebracht. Danach werden 364,6 Teile Bisphenol A zugesetzt. Die Temperatur des Ansatzes fällt dabei auf ca. 120 °C. Innerhalb 30 Minuten wird wieder auf 180 °C aufgeheizt und 1 Stunde bei dieser Temperatur gehalten. Nach Abkühlung auf 130 °C wird mit 420 Teilen Toluol verdünnt. Der Feststoffgehalt beträgt 67,8 %.

b) Herstellung eines Äthergruppen enthaltenden Polyphenols

Es werden 984 Teile eines Triglycidyläthers aus Pentaerythrit und Epichlorhydrin mit einem Epoxidwert von 0,62 und 111,2 Teile Phenol auf 180 °C aufgeheizt. Bei 180 °C erfolgt die Zugabe von 923,6 Teilen Bisphenol A. Die Temperatur des Ansatzes fällt dabei auf ca. 120 °C. Innerhalb 30 Minuten wird wieder auf 180 °C aufgeheizt und bei dieser Temperatur gehalten, bis eine Viskosität von 560 m.Pas (gemessen bei 150 °C mit dem ICI-Plattekonus Viskosimeter) erreicht ist. Nach Abkühlung auf 130 °C wird mit 968 Teilen Isobutanol verdünnt. Der Feststoffgehalt beträgt 68,5 %.

c) Tscherniac-Einhorn/Michael-Reaktion

430 Teile des nach a) hergestellten Äthergruppen enthaltenden Polyphenols, 136,5 Teile Acrylamid, 79,7 Teile Paraformaldehyd, 91 Teile p-tert.-Butylphenol, 0,4 Teile Phenothiazin und 78 Teile Bisphenol-A werden bei 115 °C gelöst. Man kühlt anschließend auf 60 °C und gibt 1 Teil Bortrifluoridäthylätherat zu. Nach 30 Minuten Reaktion bei 60 °C erfolgt die weitere Zugabe von 1 Teil Bortrifluoridäthylätherat, nach weiteren 30 Minuten bei 60 °C werden nochmals 0,7 Teile Bortrifluoridäthylätherat zugegeben. Man läßt unter Rühren 3 Stunden bei 60 °C nachreagieren. Anschliessend wird bei 120 °C Wasser ausgekreist. Danach tropft man 202 Teile Diäthanolamin zu und läßt noch 2 Stunden bei 90 °C nachreagieren. Dann wird mit 29,4 Teilen Isobutanol, 29,4 Teilen Isopropanol, 110 Teilen Butylglykol und 110 Teilen Äthylglykol verdünnt. Der Feststoffgehalt beträgt 67,3 %.

d) Tscherniac-Einhorn/Michael-Reaktion

Zunächst werden 357,3 Teile eines Phenolgruppen enthaltenden Indenharzes mit einem Gehalt von 6,1 % phenolischer OH-Gruppen, 91 Teile Acrylamid, 53,1 Teile Paraformaldehyd, 0,2 Teile Phenothiazin und 62 Teile Toluol bei 115 °C gelöst. Dann kühlt man auf 60 °C und gibt 0,7 Teile Bortrifluoridethyletherat zu. Nach 30 Minuten Reaktion bei 60 °C erfolgt die weitere Zugabe von 0,7 Teilen Bortrifluoridäthylätherat und nach weiteren 30 Minuten werden nochmals 0,4 Teile Bortrifluoridäthylätherat zugegeben. Man läßt unter Rühren 3 Stunden bei 60 °C nachreagieren. Anschließend wird bei 120 °C Wasser ausgekreist. Dann tropft man bei 90 °C 134,6 Teile Diäthanolamin zu und läßt noch 2 Stunden bei 90 °C nachreagieren. Schließlich wird mit 50 Teilen Isopropanol und 50 Teilen Isobutanol verdünnt. Der Feststoffgehalt beträgt 78,2 %.

e) Herstellung eines acrylische Doppelbindungen enthaltenden Bindemittels

Es werden 376 Teile Phenol, 497 Teile Acrylamid, 242,5 Teile Paraformaldehyd und 0,1 Teile Cu-Pulver zunächst bei 120 °C gelöst, dann auf 60 °C gekühlt und mit 8 Teilen Bortrifluoridäthylätherat katalysiert. Anschließend läßt man 4 Stunden bei 60 °C (einschließlich der exothermen Reaktionsphase) und 30 Minuten bei 100 °C reagieren. Danach wird das Reaktionswasser im Vakuum weitgehend abdestilliert. Dann wird mit Isobutanol auf einen Feststoffgehalt von 70 % verdünnt. 177 Teile des 70 %igen Bindemittels werden mit 25 Teilen Diäthanolamin bei 95 °C 2 Stunden zur Reaktion gebracht. Nach Zugabe von 123 Teilen eines Diglycidyläthers aus Bisphenol A und Epichlorhydrin mit einem Epoxidwert von 0,5, 63,4 Teilen Isopropanol und 0,1 Teilen 2,6-Di-tert.-butyl-p-kresol läßt man weitere 14 Stunden bei 85 °C reagieren. Schließlich wird mit einem Gemisch aus 3 Teilen Essigsäure und 50 Teilen vollentsalztem Wasser teilneutralisiert.

f) Herstellung eines acrylische Doppelbindungen enthaltenden Bindemittels

Es werden 376 Teile Phenol, 497 Teile Acrylamid, 210 Teile Paraformaldehyd und 0,1 Teile Cu-Pulver bei 120 °C gelöst, auf 60 °C gekühlt und mit 8 Teilen Bortrifluoridäthylätherat katalysiert. Anschließend läßt man das Gemisch 4 Stunden (einschließlich der exothermen Reaktionsphase) und 30 Minuten bei 100 °C reagieren. Danach wird das Reaktionswasser im Vakuum weitgehend abdestilliert. Dann wird mit Isobutanol auf einen Feststoffgehalt von 70 % verdünnt. Es werden 170,8 Teile des 70 %igen Bindemittels und 25 Teile Diäthanolamin bei 95 °C 2 Stunden zur Reaktion gebracht. Nach Zugabe von 123 Teilen eines Diglycidyläthers aus Bisphenol A und Epichlorhydrin mit einem Epoxidwert von 0,5, 63,4 Teilen Isopropanol und 0,1 Teilen 2,6-Di-tert.-butyl-p-kresol läßt man das Gemisch weitere 16 Stunden bei 85 °C nachreagieren. Schließlich wird mit einem Gemisch aus 3 Teilen Essigsäure und 50 Teilen vollentsalztem Wasser teilneutralisiert.

g) Herstellung eines acrylische Doppelbindungen enthaltenden Bindemittels

Es werden 376 Teile Phenol, 497 Teile Acrylamid, 242,5 Teile Paraformaldehyd und 0,1 Teile Cu-Pulver zunächst bei 120 °C gelöst, dann auf 60 °C gekühlt und mit 8 Teilen Bortrifluoridäthylätherat katalysiert. Anschliessend läßt man 4 Stunden bei 60 °C (einschließlich der exothermen Reaktionsphase) und 30 Minuten bei 100 °C reagieren. Danach wird das Reaktionswasser im Vakuum weitgehend abdestilliert. Der Ansatz wird dann mit Isobutanol auf einen Feststoffgehalt von 70 % verdünnt.

177 Teile des 70 %igen Bindemittels und 13 Teile Diäthanolamin werden bei 95 °C 2 Stunden zur Reaktion gebracht. Nach Zugabe von 123 Teilen eines Diglycidyläthers aus Bisphenol A und Epichlorhydrin mit einem Epoxidwert von 0,5 und 11,5 Teilen Isobutanol läßt man weitere 6 Stunden bei 95 °C nachreagieren. Dann wird mit Isobutanol auf einen Feststoffgehalt von 70 % verdünnt.

Herstellung des Elektrotauchlackbindemittels

Beispiel A

252,6 Teile des nach c) hergestellten Tscherniac-Einhorn/Michael-Adduktes, 125 Teile Bisphenol A, 33,5 Teile Paraformaldehyd, 37,3 Teile Diäthanolamin, 40 Teile Dibutylamin, 50 Teile Di-n-hexylamin und 60 Teile Isobutanol werden 15 Minuten bei 50 °C und anschließend 2,5 Stunden bei 80 °C gerührt. Dann erfolgt die Zugabe von 137,3 Teilen eines Diglycidyläthers aus Bisphenol A und Epichlorhydrin mit einem Epoxidwert von 0,2 ; 54,7 Teilen eines Triglycidyläthers und 50 Teilen Isobutanol. Bei 70 °C läßt man nachreagieren, bis eine Viskosität von 1 350 mPa.s (gemessen bei 75 °C mit dem ICI-Platte-Konus-Viskosimeter der Fa. Epprecht) erreicht ist. Anschließend wird mit 50 Teilen Isobutanol verdünnt. Der Feststoffgehalt beträgt 73,3 %.

Beispiel B

252,6 Teile des nach c) hergestellten Tscherniac-Einhorn/Michael-Adduktes, 33,5 Teile Paraformaldehyd, 125 Teile Bisphenol A, 86,4 Teile Di-n-butylamin, 50 Teile Di-n-hexylamin und 29 Teile Isobutanol werden 15 Minuten bei 50 °C und anschließend 2,5 Stunden bei 80 °C gerührt. Dann erfolgt die Zugabe von 137,3 Teilen eines Diglycidyläthers aus Bisphenol A und Epichlorhydrin mit einem Epoxidwert von 0,2, 54,7 Teilen eines Triglycidyläthers aus Pentaerythrit und Epichlorhydrin mit einem Epoxidwert von 0,62 und 50 Teilen Isobutanol. Bei 70 °C läßt man nachreagieren, bis eine Viskosität von 740 mPa.s (gemessen bei 75 °C mit einem ICI-Platte-Konus-Viskosimeter) erreicht ist und verdünnt dann mit 50 Teilen Isobutanol. Der Feststoffgehalt beträgt 74,2 %.

Beispiel C

268,5 Teile des nach d) erhaltenen Tscherniac-Einhorn/Michael-Adduktes, 82,5 Teile Bisphenol A, 26,7 Teile Paraformaldehyd, 95,6 Teile Di-n-butylamin, 70 Teile Isopropanol und 35 Teile Isodekanol werden 15 Minuten bei 50 °C und anschließend 2,5 Stunden bei 80 °C gerührt. Dann erfolgt die Zugabe von 142 Teilen eines Diglycidyläthers aus Bisphenol A und Epichlorhydrin mit einem Epoxidwert von 0,1 und 47 Teilen Toluol. Nach weiteren 30 Minuten bei 75 bis 80 °C werden 103 Teile eines Diglycidyläthers aus Bisphenol A und Epichlorhydrin mit einem Epoxidwert von 0,2, 56 Teile eines Triglycidyläthers aus Pentaerythrit und Epichlorhydrin mit einem Epoxidwert von 0,62, 24 Teile Isopropanol und 50 Teile Ethylglykol zugegeben. Bei 70 °C läßt man nachreagieren, bis eine Viskosität von 440 mPa.s (gemessen bei 75 °C mit dem ICI-Platte-Konus-Viskosimeter) erreicht ist. Die Reaktion wird durch Zugabe von 7 Teilen Merkaptoethanol abgebrochen. Der Feststoffgehalt beträgt 69,5 %.

Beispiel D

Entsprechend Beispiel 1 aus der DE-PS 24 19 179, jedoch unter Weglassung des Acetylendiharnstofftetramethoxybutylethers werden 79 Teile des unter b) hergestellten Polyphenols, 125 Teile Bisphenol A, 78,3 Teile Diäthanolamin, 40 Teile Dibutylamin, 50 Teile Dihexylamin, 43,7 Teile Paraformaldehyd und 83,3 Teile Isobutanol 15 Minuten bei 50 °C und 2,5 Stunden bei 80 °C gerührt. Nach der Zugabe von 137,3 Teilen eines Diglycidyläthers aus Bisphenol A und Epichlorhydrin mit einem Epoxidwert von 0,2, 54,7 Teilen eines Triglycidyläthers aus Pentaerythrit und Epichlorhydrin mit einem Epoxidwert von 0,62 und 50 Teilen Isobutanol wird die Reaktion 5 Stunden bei 70 °C fortgesetzt. Es wird eine Viskosität von 1 360 mPa.s (gemessen bei 75 °C mit dem ICI-Platte-Konus-Viskosimeter) erreicht. Anschließend wird mit 50 Teilen Isobutanol verdünnt. Der Feststoffgehalt beträgt 67,1 %.

## Elektrotauchlackierung

### Beispiel 1

Zur Herstellung eines 10 %igen Lackbades werden 70 Teile des nach Beispiel A erhaltenen Festharzes, 30 Teile des nach e) hergestellten Festharzes, 1 Teil Co-Soligen® (8 %Co-Gehalt) der Fa. Hoechst AG) und 120 ppm $Cu^{++}$ (berechnet auf Badvolumen) als wäßrige Kupferacetatlösung gut gemischt, mit 1,25 % Essigsäure (berechnet auf Festharz) protoniert und mit vollentsalztem Wasser auf 1 000 Teile aufgefüllt. Das Lackbad wird dann 48 Stunden bei 30 °C gerührt ; es hat einen pH-Wert von 7,0 und einen Leitwert von 1 066 $\mu S.cm^{-1}$. Nach dem Ausrühren erfolgt die Zugabe von 5 Teilen Isodekanol. Auf als Kathode geschalteten phosphatierten Stahlblechen erhält man nach der Abscheidung (2 Minuten bei 110 Volt und 30 °C) und Härtung (20 Minuten bei 180 °C) einen Überzug mit einer Schichtdicke von 14 bis 16 µm. Auf nicht vorbehandelten Stahlblechen erhält man nach der Abscheidung (2 Minuten bei 70 Volt und 30 °C) und Härtung (20 Minuten bei 180 °C) einen Überzug mit einer Schichtdicke von 14 bis 16 µm. Die Korrosionsprüfung nach DIN 50021 ergab nach 10 Tagen auf zinkphosphatierten Stahlblechen, die wassernachgespült waren (z. B. Bonder® 125 W der Fa. Metallgesellschaft AG), eine Unterwanderung von 0,3 bis 0,9 mm und auf nichtvorbehandelten Stahlblechen eine Unterwanderung von 3 bis 4 mm (gemessen im Schnitt).

### Beispiel 2

Es werden 80 Teile des nach Beispiel B erhaltenen Festharzes, 20 Teile des nach d) hergestellten Festharzes, 80 ppm $Cu^{++}$ (berechnet auf Badvolumen) als wäßrige Kupferacetatlösung und 25 ppm $Co^{++}$ (berechnet auf Badvolumen) als wäßrige Kobaltnitratlösung gut gemischt, mit 2 % Essigsäure protoniert und mit vollentsalztem Wasser auf 1 000 Teile aufgefüllt. Das Lackbad wird dann 48 Stunden bei 30 °C gerührt ; es hat einen pH-Wert von 6,1 und einen Leitwert von 1 225 $\mu S.cm^{-1}$. Nach dem Ausrühren erfolgt die Zugabe von 1 Teile Isodekanol. Auf phosphatierten Stahlblechen erhält man nach der Abscheidung (2 Minuten bei 175 Volt und 30 °C) und Härtung (20 Minuten bei 180 °C) einen Überzug mit einer Schichtdicke von 15 bis 17 µm.

Die Korrosionsprüfung nach DIN 50021 ergab nach 10 Tagen auf zinkphosphatierten Stahlblechen, die wassernachgespült waren, eine Unterwanderung von 0,5 bis 1,5 mm und auf eisenphosphatierten Stahlblechen, die wassernachgespült waren (z. B. Bonder® 1041 W) eine Unterwanderung von 0,2 bis 0,8 mm (gemessen vom Schnitt).

### Beispiel 3

80 Teile des nach Beispiel C erhaltenen Festharzes, 20 Teile des nach d) hergestellten Festharzes, 5 Teile Alfol® 1214/4 (der Fa. Condea); 80 ppm $Cu^{++}$ (berechnet auf Badvolumen) als wäßrige Kupferacetatlösung und 25 ppm $Co^{++}$ (berechnet auf Badvolumen) als wäßrige Kobaltnitratlösung werden gut gemischt, mit 2 % Essigsäure (berechnet auf Festharz) protoniert und mit vollentsalztem Wasser auf 1 000 Teile aufgefüllt. Das Lackbad wird dann 48 Stunden bei 30 °C gerührt ; es hat einen pH-Wert von 6,15 und einen Leitwert von 1 236 $\mu S.cm^{-1}$. Auf phosphatierten Stahlblechen erhält man nach der Abscheidung (2 Minuten bei 120 Volt und 30 °C) und Härtung (20 Minuten bei 180 °C) einen Überzug mit einer Schichtdicke von 15 bis 17 µm. Auf nicht vorbehandelten Stahlblechen erhält man nach der Abscheidung (2 Minuten bei 85 Volt und 30 °C) und Härtung (20 Minuten bei 180 °C) einen Überzug mit einer Schichtdicke von 14 bis 16 µm. Die Korrosionsprüfung nach DIN 50021 ergab nach 10 Tagen auf zinkphosphatierten Stahlblechen, die wassernachgespült waren, eine Unterwanderung von 0,5 bis 1,1 mm, auf eisenphosphatierten Stahlblechen, die wassernachgespült waren, eine Unterwanderung von 2,7 bis 6,5 mm (gemessen vom Schnitt).

### Beispiel 4

Zur Herstellung eines 10 %igen Lackbades werden 50 Teile des nach Beispiel D erhaltenen Festharzes, 50 Teile des nach f) hergestellten Festharzes, 5 Teile Butylglykol und 120 ppm $Cu^{++}$ (berechnet auf Badvolumen) als wäßrige Kupferacetatlösung gut gemischt, mit 0,5 % Essigsäure (berechnet auf Festharz) protoniert und mit vollentsalztem Wasser auf 1 000 Teile aufgefüllt. Das Lackbad

wird dann 48 Stunden bei 30 °C gerührt ; es hat einen pH-Wert von 7,05 und einen Leitwert von 1 090 $\mu S.cm^{-1}$. Nach dem Ausrühren erfolgt die Zugabe von 15 Teilen Isodekanol. Auf phosphatierten Stahlblechen erhält man nach der Abscheidung (2 Minuten bei 110 Volt und 30 °C) und Härtung (20 Minuten bei 180 °C) einen Überzug mit einer Schichtdicke von 14 bis 16 µm. Auf nicht vorbehandelten Stahlblechen erhält man nach der Abscheidung (2 Minuten bei 35 Volt und 30 °C) und Härtung (20 Minuten bei 180 °C) einen Überzug mit einer Schichtdicke von 15 bis 16 µm. Die Korrosionsprüfung nach DIN 50021 ergab nach 10 Tagen auf zinkphosphatierten Stahlblechen, die wassernachgespült waren, eine Unterwanderung von 0,7 bis 1,4 mm, auf eisenphosphatierten Stahlblechen, die wassernachgespült waren, eine Unterwanderung von 1 bis 2,5 mm und auf nicht vorbehandelten Stahlblechen eine Unterwanderung von 1,6 bis 2,5 mm (gemessen vom Schnitt).

## Beispiel 5

60 Teile des nach Beispiel D erhaltenen Festharzes, 40 Teile des nach g) hergestellten Festharzes, 5 Teile Butylglykol und 120 ppm $Cu^{++}$ (berechnet auf Badvolumen) als wäßrige Kupferacetatlösung werden gut gemischt, mit 1 % Essigsäure (berechnet auf Festharz) protoniert und mit vollentsalztem Wasser auf 1 000 Teile aufgefüllt. Das Lackbad wird dann 48 Stunden bei 30 °C gerührt ; es hat einen pH-Wert von 7,2 und einen Leitwert von 957 $\mu S.cm^{-1}$. Nach dem Ausrühren erfolgt die Zugabe von 7,5 Teilen Isodecanol. Auf phosphatierten Stahlblechen erhält man nach der Abscheidung (2 Minuten bei 130 Volt und 30 °C) und Härtung (20 Minuten bei 180 °C) einen Überzug mit einer Schichtdicke von 14 bis 16 µm. Auf nichtvorbehandelten Stahlblechen erhält man nach der Abscheidung (2 Minuten bei 40 Volt und 30 °C) und Härtung (20 Minuten bei 180 °C) einen Überzug mit einer Schichtdicke von 14 bis 15 µm.

Die Korrosionsprüfung nach DIN 50021 ergab nach 10 Tagen auf zinkphosphatierten Stahlblechen, die wassernachgespült waren, eine Unterwanderung von 0,5 bis 1 mm, auf eisenphosphatierten Stahlblechen, die wassernachgespült waren, eine Unterwanderung von 0,5 bis 1,2 mm und auf nichtvorbehandelten Stahlblechen eine Unterwanderung von 1 bis 3,5 mm (gemessen vom Schnitt).

**Patentansprüche**

1. Badzusammensetzung für die kataphoretische Elektrotauchlackierung, enthaltend neben Wasser und üblichen Hilfs- und Zusatzstoffen ein oder mehrere mit Säure löslich oder dispergierbar gemachte, stickstoffbasische Gruppen enthaltende Beschichtungsmittel, dadurch gekennzeichnet, daß das oder die Beschichtungsmittel Gruppen der allgemeinen Formeln (I) und (II)

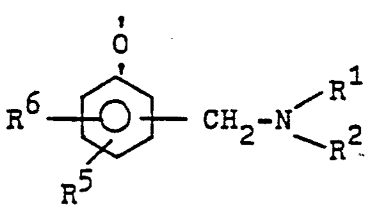

(I)

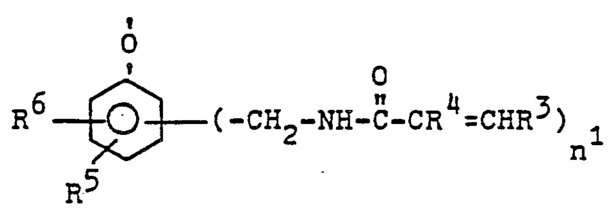

(II)

sowie gegebenenfalls zusätzlich Gruppen der allgemeinen Formeln (III) und/oder (IV)

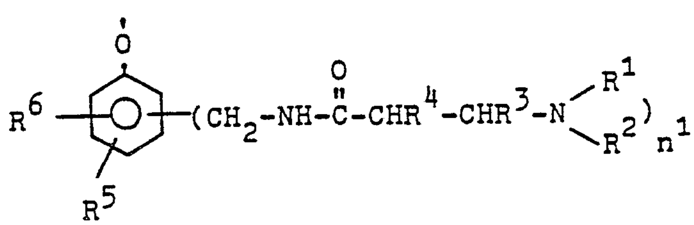

(III)

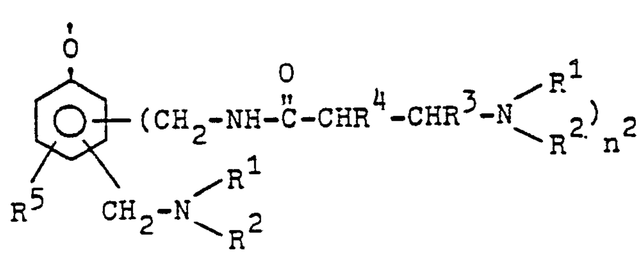

(IV)

tragen, worin $R^1$ und $R^2$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6-gliedrigen Ring verknüpft sind, $R^3$ und $R^4$ untereinander gleich oder verschieden sind und für Wasserstoff oder eine Methylgruppe stehen, $R^5$ und $R^6$ untereinander gleich oder verschieden sind und für Wasserstoff, einen Alkylrest mit 1 bis 13 Kohlenstoffatomen, einen Alkenylrest mit 10 bis 18 Kohlenstoffatomen oder für einen an ein Phenol oder einen Phenoläther gebundenen Methylen-, Äthylen-, Isopropyliden-,

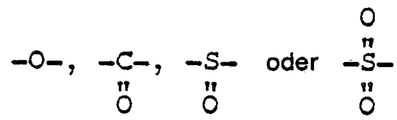
oder

Rest oder für den Rest eines Polymermoleküls stehen und $n^1$ = 1, 2 oder 3, $n^2$ = 1 oder 2 sein kann, wobei der am Phenylrest der Formeln (I) bis (IV) gebundene Sauerstoff entweder als Bestandteil einer Hydroxylgruppe oder einer Äthergruppe vorliegen kann.

2. Badzusammensetzung nach Anspruch 1, dadurch gekennzeichnet, daß Kupfer und/oder Kobalt komplex gebunden, in Mengen von 1 bis 1 000 ppm enthalten sind.

3. Badzusammensetzung nach Anspruch 1, dadurch gekennzeichnet, daß sie Pigmente und/oder Füllstoffe und/oder organische Lösungsmittel enthält.

4. Badzusammensetzung nach Anspruch 1, 2 oder 3, dadurch gekennzeichnet, daß sie zusätzlich nicht wasserlösliche oder wasserdispergierbare Bindemittel enthält.

## Claims

1. A bath composition for cataphoretic electrocoating, containing, in addition to water and conventional assistants and additives, one or more coating agents which have been rendered soluble or dispersible with acid and contain basic nitrogen groups, wherein the coating agent or agents carries or carry groups of the general formulae (I) and (II)

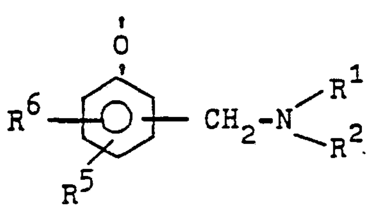

(I)

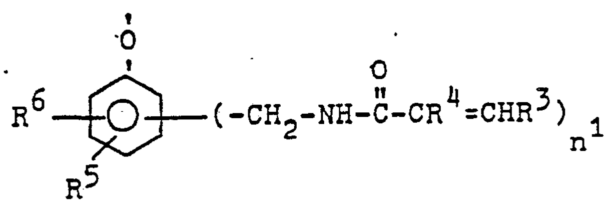

(II)

and, optionally, also groups of the general formulae (III) or (IV)

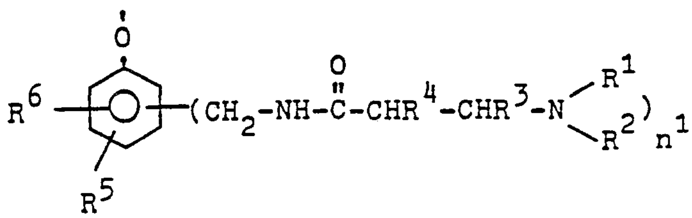

(III)

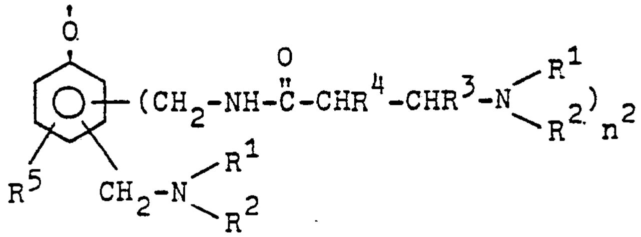

(IV)

or groups of the formulae (III) and (IV) where $R^1$ and $R^2$ are identical or different and are each alkyl of 1 to 9 carbon atoms, or hydroxyalkyl or alkoxyalkyl, each of 2 to 10 carbon atoms, or are linked to one another to form a 5-membered or 6-membered ring, $R^3$ and $R^4$ are identical or different and each is hydrogen or

methyl, $R^5$ and $R^6$ are identical or different and each is hydrogen, alkyl of 1 to 13 carbon atoms, alkenyl of 10 to 18 carbon atoms or a methylene, ethylene or isopropylidene radical which is bonded to a phenol or phenol ether, or

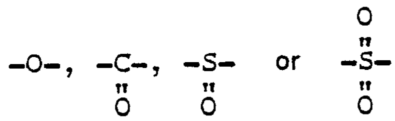

or the radical or a polymer molecule, $n^1$ can be 1, 2 or 3 and $n^2$ can be 1 or 2, and where the oxygen bonded to the phenyl radical of the formulae (I) to (IV) can be a component either of a hydroxyl group or of an ether group.

2. A bath composition as claimed in claim 1, which contains from 1 to 1,000 ppm of complex-bonded copper or cobalt or copper and cobalt.

3. A bath composition as claimed in claim 1, which contains pigments, fillers or organic solvents, or mixtures of these substances.

4. A bath composition as claimed in claim 1, 2 or 3, which additionally contains water-insoluble or water-indispersible binders.

**Revendications**

1. Composition de bain pour l'électro-vernissage à immersion cataphorétique, contenant, à côté d'eau et d'additifs et adjuvants usuels, un ou plusieurs agents d'enduction à groupes azotés basiques, rendus solubles ou dispersibles par de l'acide, caractérisée en ce que le ou les agents d'enduction comprennent des groupes des formules générales (I) et (II)

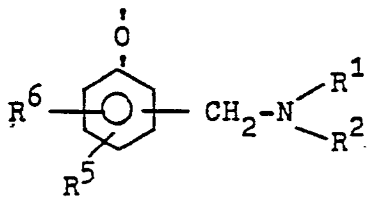

(I)

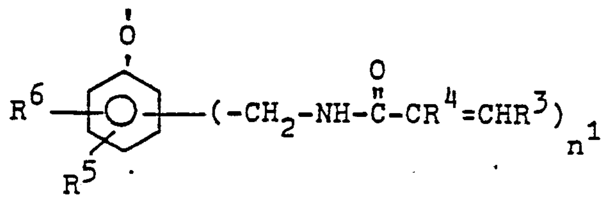

(II)

et éventuellement des groupes additionnels des formules générales (III) et/ou (IV)

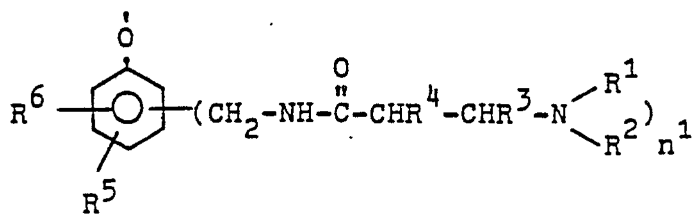

(III)

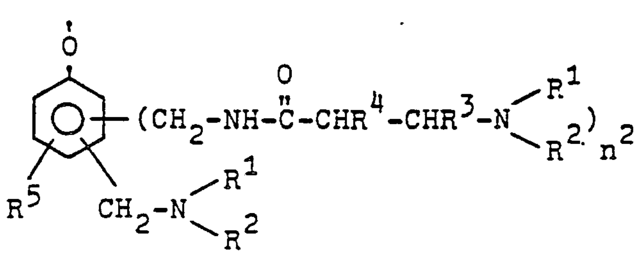

(IV)

dans lesquelles $R^1$ et $R^2$, qui peuvent être identiques ou différents, désignent chacun un radical alkyle en $C_1$ à $C_9$ ou un groupe hydroxy-alkyle ou alcoxy-alkyle en $C_2$ à $C_{10}$ ou forment ensemble un noyau cyclique penta- ou hexagonal ; $R^3$ et $R^4$, qui peuvent être identiques ou différents, désignent chacun un atome d'hydrogène ou un radical méthyle ; $R^5$ et $R^6$, qui peuvent être identiques ou différents, désignent chacun un atome d'hydrogène, un radical alkyle en $C_1$ à $C_{13}$ ou un radical alcényle en $C_{10}$ à $C_{18}$ ou un groupe méthylène, éthylène, isopropylidène,

$$-O-,\quad -\underset{O}{\underset{\|}{C}}-,\quad -\underset{O}{\underset{\|}{S}}-\quad \text{ou}\quad -\overset{O}{\overset{\|}{\underset{O}{\underset{\|}{S}}}}-$$

lié à un phénol ou un phénol-éther, ou le reste d'une molécule de polymère ; $n^1$ vaut 1, 2 ou 3 et $n^2$ vaut 1 ou 2, l'atome d'oxygène lié au groupe phényle des formules (I) à (IV) pouvant faire partie d'un groupe hydroxyle ou d'un groupe éther.

2. Composition de bain suivant la revendication 1, caractérisée en ce qu'elle contient du cuivre et (ou) du cobalt, lié(s) dans un complexe, en des proportions de 1 à 1 000 ppm.

3. Composition de bain suivant la revendication 1, caractérisée en ce qu'elle contient des pigments et (ou) des matières de charge et (ou) un solvant organique.

4. Composition de bain suivant la revendication 1, 2 ou 3, caractérisée en ce qu'elle contient de plus des liants insolubles dans l'eau ou non dispersibles dans l'eau.